## Europäisches Patentamt

## European Patent Office

## Office européen des brevets

(19)

(11) Veröffentlichungsnummer: **0 236 735**
**B1**

(12) **EUROPÄISCHE PATENTSCHRIFT**

(45) Veröffentlichungstag der Patentschrift:
**31.05.89**

(21) Anmeldenummer: **87101516.0**

(22) Anmeldetag: **04.02.87**

(51) Int. Cl.⁴: **C03C 25/06**, C03C 25/02,
D06B 21/02

(54) Umgewandelte Glasfaser mit verbesserter Temperaturbeständigkeit.

(30) Priorität: **07.02.86 DE 3603909**
**30.01.87 DE 3702815**

(43) Veröffentlichungstag der Anmeldung:
**16.09.87 Patentblatt 87/38**

(45) Bekanntmachung des Hinweises auf die Patenterteilung:
**31.05.89 Patentblatt 89/22**

(84) Benannte Vertragsstaaten:
**AT BE CH DE ES FR GB IT LI LU NL SE**

(56) Entgegenhaltungen:
**DE-A- 2 132 866**
**DE-B- 1 694 501**

(73) Patentinhaber: **Frenzelit Werke GmbH & Co. KG,
Frankenhammer/Postfach 1140, D-8582 Bad
Berneck(DE)**

(72) Erfinder: **Schmidt, Ulrich, Dr.Dipl.-Chem.,
Sterntalerring 116, D-8580 Bayreuth(DE)**
Erfinder: **Schnabel, Manfred, Dipl.-Ing.,
Weberstrasse 22, D-8653 Mainleus(DE)**
Erfinder: **Haack, Hans, Gottliebstalstrasse 6,
D-8582 Bad Berneck(DE)**
Erfinder: **Füssmann, Klaus, Seidelsberg 2,
D-8656 Thurnau(DE)**

(74) Vertreter: **Patentanwälte Müller-Boré, Deufel, Schön,
Hertel, Lewald, Otto, Postfach 26 02 47 Isartorplatz 6,
D-8000 München 26(DE)**

ACTORUM AG

**Beschreibung**

Es ist bekannt, Glasfaser zur Verbesserung der Temperaturbeständigkeit mit Säure zu behandeln. Dies erfolgt unter Gewichtsverlust, weil die dem Glas zur Schmelzpunktserniedrigung zugesetzten Bestandteile extrahiert werden.

Diese Säurebehandlung hat jedoch einen erheblichen Festigkeitsabfall zur Folge. Wenn man z.B. durch Säurebehandlung aus der Glasfaser 20 % des Ausgangsgewichtes extrahiert, verbleiben nur etwa 10 % der Anfangsfestigkeit (es ergibt sich z.B. ein Festigkeitsabfall von 300 N auf ca 30 N). Wenn auch die Temperaturfestigkeit dabei auf ca. 900°C steigt, können solche Fasern wegen der geringen Restfestigkeit nicht mehr zu brauchbaren Produkten verarbeitet oder als brauchbare Produkte eingesetzt werden.

Daher werden anschließend an die Säureextraktion Temperungen zur Veredelung der Glasfaser durchgeführt oder Chromverbindungen angelagert oder man setzt schon bei der Säureextraktion der Säure hochreines Wasserglas zu und behandelt dann zur Vergütung mit Lösungen von Metallkomplexen mit organischen Komplexbildnern und erhitzt dann auf Temperaturen zwischen 600 und 1000°C (DE-A 28 38 476). Dies führt zwar zu einem geringeren Festigkeitsverlust der behandelten Glasfaser, jedoch reicht die so erzielte Festigkeit für viele Anwendungszwecke, z.B. zur Weiterverarbeitung der Fasern auf einem Bandwebstuhl ebenfalls noch nicht aus. Daher kann man die bekannten Säurebehandlungen nur auf Fertigprodukte, z.B. fertige Gewebe oder Bänder anwenden, nicht jedoch auf Glasfasern, die hinterher noch auf Textilmaschinen weiterverarbeitet werden sollen.

Die DE-AS 1 026 925 zeigt die praktisch völlige Extraktion aller säurelöslichen Anteile bei Glasfaser, was einem Auswaschgrad von ca. 45 % entspricht. Ebenso zeigt dies die DE-AS 28 29 413, bei welcher soweit extrahiert wird, daß der SiO$_2$-Gehalt der Glasfaser zwischen 90 und nahezu 100 % beträgt, worauf dann Metallsalze aufgebracht und diese zuerst in ihre Hydroxide und dann durch Glühen in die Oxide umgewandelt werden. Auch solche Glasfasern lassen sich nicht mehr verweben sondern werden z.B. zu Matten gepreßt.

Außerdem entsteht durch die Säurebehandlung der Glasfasern, auch bei den bekannten Nachveredelungen, bei der Weiterverarbeitung eine erhöhte Menge an Glasstaub, da kleine Glasfaserstückchen abbrechen und als Staub in die Luft gehen, was arbeitsmedizinisch bedenklich ist.

Es besteht daher das Bedürfnis, die Hitzefestigkeit von Glasfasern zu erhöhen, gleichzeitig jedoch ihren Festigkeitsabfall wesentlich zu verringern, so daß man sie auf Textilmaschinen weiterverarbeiten kann und zusätzlich die Staubungsgefahr wesentlich herabzusetzen oder weitgehend zu beseitigen.

Dies wird erreicht, indem man auf die zu 1 bis 30 Gew.-% von säurelöslichen Bestandteilen befreite Faser neben ggfs. einem färbenden Überzug einen beständigen, feuchtigkeits- und wasserdampfdichten dünnen, elastischen Überzug aufbringt, so daß die umhüllte Faser einen Restwassergehalt von 5 bis 10 Gew.-%, vorzugsweise 5 bis 7 Gew.-% aufweist. Vorzugsweise wird die Faser zu 2 bis 20 Gew.-%, insbesondere 2 bis 15 Gew.-% von säurelöslichen Bestandteilen befreit, wobei man vorzugsweise E-Glas und insbesondere Glasfasern von maximal 9 μm, noch besser 6 μm behandelt.

Diese Glasfaser wird hergestellt, indem man sie ohne Temperatursprünge in Säure erhitzt, die Extraktion durchführt und relativ langsam abkühlt, die extrahierte Glasfaser spült und dann eine Schlichte aufbringt, die auf der Glasfaser eine beständige wasserdampfdichte Hülle bildet, und diese Glasfaser vor dem völligen Austrocknen schützt.

Im einzelnen besteht das Verfahren zur Herstellung dieser Glasfaser darin, daß eine Faser-Säuremischung langsam innerhalb einer Zeitspanne von 1/2 bis 3 Stunden auf Temperaturen im Bereich von 50°C bis dicht unterhalb des Siedepunktes der Säure erhitzt, bei dieser Temperatur gehalten und anschließend langsam auf Umgebungstemperatur abgekühlt wird, wobei Temperatursprünge im Bereich über 50°C sowohl beim Aufheizen wie beim Abkühlen vermieden werden und zur Erzielung eines Auslaugungsgrades von mindestens 1 Gew.-% bis höchstens 30 Gew.-% des ursprünglichen Fasergewichtes die Behandlung ggfs. unter Druck durchgeführt wird und die so extrahierte Glasfaser nach dem Auswaschen der Säurereste, ggfs. unter Zusatz von Basen und ggfs. nach Aufbringen einer Kennfärbung mit einer zu einem wasserdampfdichten Film trocknenden Schicht versehen wird.

Bei einem Extraktionsgrad bei 6μm und 9μm-Fasern von z. B. 20 %, wobei normalerweise 10 % Restfestigkeit des Glases bleiben, kann man durch diese Art der Säurebehandlung und das Aufbringen eines solchen Kunststofffilmes, der das Austrocknen des ausgelaugten Glases verhindert, einen Festigkeitszuwachs von 300 bis 400% des üblichen extrahierten Glasfasermaterials erzielen, also eine Festigkeitszunahme von ca. 30 N auf ca. 120 N bei 9μm-Fasern während bei 6μm-Fasern sogar ca. 50 % der ursprünglichen Festigkeit erhalten werden können. Gleichzeitig erfolgt eine gute Staubbindung und die Fasern stauben beim Weiterverarbeiten auf Textilmaschinen praktisch nicht.

Für die Säureextraktion werden vorzugsweise anorganische Säuren benutzt, die mit Glasbestandteilen keine schwerlöslichen Salze bilden, also insbesondere Salpetersäure oder Salzsäure, jedoch sind auch hinreichend starke organische Säuren wie Oxalsäure, Weinsäure oder Trichloressigsäure brauchbar. Salpetersäure wird bevorzugt.

Der Auswaschgrad sollte wenigstens 1 % und höchstens 30 Gew.-% des Anfangsgewichtes der Glasfasern betragen, vorzugsweise 2 bis 20 % und insbesondere 2 bis 15 %. Die Temperaturfestigkeit normaler Glasfasern aus E-Glas beträgt etwa 600°C. Bei dieser Temperatur verliert dann die Glasfaser ihre Festigkeit.

Bei einem Auswaschgrad bei E-Glas von 2 % steigt die Anwendungstemperatur auf über 700°C, bei 10 bis 12 % auf über 750°C, bei ca. 20 % auf ca. 900°C und bei 30 % auf über 1000°C, allerdings immer mit den eingangs erwähnten starken Verarbeitungsproblemen. Die Versiegelung der Faser nach dem Auswaschen verhindert diese Verarbeitungsprobleme, da immer die erwähnte erhöhte Festigkeit bei gleichzeitiger Staubbindung eintritt.

Die Dicke der verwendeten Glasfaser beträgt vorzugsweise 9μm oder weniger, insbesondere 6μm.

Bevorzugt ist E-Glas. Da C-Glas chemisch resistenter ist und unter den Bedingungen, wo man mit E-Glas 20 % Gewichtsverlust erzielt, nur etwa 2 bis 3 % Gewichtsverlust eintreten, sind schärfere Bedingungen anzuwenden. Diese können aber durch einige Vorversuche ermittelt werden.

Bei E-Glas ist die Behandlung vorzugsweise je nach dem gewünschten Extraktionsgrad wie folgt: Die Säure wird gewöhnlich in einer Konzentration, die etwa 10 bis 200 g $HNO_3$ 52/53 % pro l Extraktionsflotte entspricht, angewandt. Bei einer Extraktion von 1 bis 10 % beträgt die Konzentration etwa 10 bis 100 g/l dieser Säure und bei gewünschten Extraktionsgraden von 10 bis 30 % beträgt die Säurekonzentration 100 bis 200 g/l. Für die bevorzugte schwach extrahierte Faser mit etwa 2 Gew.-% Extraktionsgrad wird eine Menge von 12 g bis 15 g pro l an Salpetersäure 52/53 % angewandt. Wenn man 1 bis 3 g/l säurebeständiges Netzmittel zugibt, kann man gleichzeitig die Säuremenge um 10 bis 20 % verkleinern.

Die normale Behandlungstemperatur beträgt etwa 60°C bis dicht unter dem Siedepunkt der Flotte, vorzugsweise etwa 80°C. Die Behandlungsdauer beträgt 1 bis 2 h, je nach Temperatur und Säurekonzentration, vorzugsweise jedoch ca. 30 min um von Zimmertemperatur auf 80°C zu erwärmen, dann wird ca. 30 min auf 80°C gehalten und dann innerhalb von 15 min auf ca. 50°C abgekühlt. Das weitere Abkühlen kann dann schneller, ggfs. durch Kaltwasserzulauf erfolgen. Temperatursprünge beim Aufheizen und beim Abkühlen im Bereich über 50°C sollen vermieden werden, da sie sich ungünstig auf die Festigkeit auswirken können.

Dem Spülbad (Wasser) ist ein Neutralisiermittel, vorzugsweise Ammoniak, zugesetzt. Der pH-Wert beträgt nach ca. 10 min Behandlung vorzugsweise 8, so daß alle Säurereste gebunden werden.

Wie erwähnt, können bei Verwendung weniger schnell extrahierender Säuren und bei C-Glas die Temperaturen weiter erhöht und/oder die Zeiten verlängert werden, um den gewünschten Extraktionsgrad zu erzielen.

Da es jedoch aus betriebstechnischen Gründen am einfachsten ist, Zeit und Temperaturprogramm immer unverändert beizubehalten, werden verschiedene Auswaschgrade am leichtesten durch Variation der Säurekonzentration beeinflußt, wie dies noch näher erläutert wird.

Die gespülte neutralisierte Glasfaser kann dann gewünschtenfalls gefärbt werden, um ihr beispielsweise eine Kennfarbe zu verleihen, wobei sich insbesondere basische Farbstoffe eignen.

Die noch feuchte Glasfaser wird dann mit einer Schlichte versehen, vorzugsweise in wässriger Dispersion. Diese Schlichte muß dann auf der Glasfaser eine feuchtigkeitsdichte Hülle bilden und zwar derart, daß beim z.B. Vernetzen des Schlichtemittels, das gewöhnlich unter Wärmeeinwirkung erfolgt, die Glasfaser nicht vollständig trocknet, sondern eine Restfeuchte von mindestens 5 % behält und diese Restfeuchte auch bei der späteren Lagerung und Anwendung größenordnungsmäßig beibehalten wird.

Als Schlichtemittel eignen sich im Prinzip alle Materialien, die einen praktisch wasserdichten bzw. wasserdampfdichten Überzug auf der Glasfaser bilden. Bevorzugt sind hitzereaktive, selbstvernetzende copolymere Kunststoffderivate, insbesondere in Mischung mit Polysiloxanen und Polyalkylenen wie sie für die Hochveredelung von Geweben und Gewirken aller Faserarten eingesetzt werden. Solche Copolymere sind gewöhnlich bei Temperaturen ab 130°C unter Vernetzung hitzereaktiv. Es sind aber auch Siliconelastomere, Polyvinylalkoholdispersion und andere elastische Lacksysteme, z.B. Polyurethan, brauchbar, wenn sie die oben genannten Bedingungen erfüllen.

Bevorzugt sind jedenfalls Verbindungen, die aus wässrigen Systemen aushärten und eine gewisse Dauerelastizität beibehalten.

Ein bevorzugtes Mittel zur Durchführung des Verfahrens ist die Anwendung des in der Textilfärberei üblichen AZ-Verfahrens für die Säurebehandlung. Dabei kann die Glasfaser vorzugsweise in Form von handelsüblichen Färbespulen direkt in die HT-Färbeapparatur eingesetzt werden, wie dies auch bei der HT-Färberei üblich ist, und die Säure wird (wie sonst die Färbeflotte) von innen nach außen oder alternativ auch umgekehrt oder wechselseitig durch die Spulen zirkuliert. Das Garn kann anschliessend direkt von der Färbespule weiterverarbeitet werden.

Zum Begriff Auszieh-Verfahren bzw. AZ-Verfahren siehe Ullmanns Encyklopädie der technischen Chemie, 4. Auf., Bd. 22, S. 643.
Zum Begriff HT-Färberei bzw. Hochtemperaturfärberei siehe Ullmanns Encyklopädie der technischen Chemie, 3. Aufl., Bd. 7, Seite 9 - 11.

Die HT-Apparatur wird mit geringem Druck betrieben, das heißt der bei den üblichen Ausführungen dieser Färbeapparatur vorhandene Bypass bleibt offen. Sollte es sich z.B. bei C-Glas herausstellen, daß damit keine genügende Extraktion, also kein genügender Gewichtsverlust erzielt wird, kann auch unter hohem Druck mit geschlossenem Bypass gearbeitet werden.

Das Trockenen der Glasfaser, das schon mit aufgebrachter Schlichte erfolgen muß, die dabei z.B.vernetzt, kann auf jede übliche Weise erfolgen. Bevorzugt ist aber auch hier die für die HT-Apparatur übliche Trockeneinheit, weil auf diese Weise die Kapazität beider Apparatureinheiten aufeinander abgestimmt ist und die Trocknung besonders schnell durchzuführen ist.

Wichtig beim Trocknen ist nur, daß die Faser nicht austrocknet, bevor der feuchtigkeitsdichte Überzug ausgehärtet ist und somit die Glasfaser vor dem völligen Austrocknen schützt, also die Vernetzung oder allgemein die Bildung einer wasserdampfdichten Schicht auf der Glasfaser beendet ist, bevor die Glasfaser auf weniger als 5 - 7 % Feuchtigkeit (unter der wasserdampfdichten Schicht) getrocknet ist.

Wie oben erwähnt, kann der Extraktionsgrad am einfachsten durch Variieren der Säurekonzentration beeinflußt werden. Eine weitere Möglichkeit ist die Verringerung des Flottenverhältnisses. Während bei Auswaschgraden von 10 bis 30 % ein Flottenverhältnis von 1 : 5 (Gew.-Verhältnis Ware zu Bad) bevorzugt ist, ist für die schwächeren Auswaschgrade ein Flottenverhältnis von 1 : 4 bevorzugt. Wenn das Flottenverhältnis erhöht wird, steigt bei gleicher Säurekonzentration im Bad der Auswaschgrad der Glasfaser.

Durch Zugabe von säurebeständigen Netzmitteln, wie nichtionischen Netzmitteln, z.B. Alkylpolyglykoläthern (als Beispiel sei Perenin GNS genannt) kann der Säureeinsatz, bei gleichbleibendem Auswaschgrad um 10 bis 20 % gesenkt werden, offenbar weil die Spulen beim Einlaufen des Säurebades schneller und besser entlüftet werden und die Säure besser an die Faser transportiert und das ausgewaschene Material besser abtransportiert wird.

Besonders interessant ist ein Auswaschgrad um 2 %, z.B. 2 bis 2,5 Gew.-%, da hier schon eine Erhöhung der Temperaturfestigkeit auf über 700°C feststellbar ist, während der durch das Auswaschen auf etwa die Hälfte der Ausgangsfestigkeit abgefallene Festigkeitswert der unbehandelten Faser nach dem Aufbringen des wasserdampfdichten Überzuges auf fast 90 % der Ausgangsfestigkeit ansteigt. Dabei genügt bei einem Flottenverhältnis von 1 : 4 eine Menge von 12 g/l Salpetersäure 52/53 % und 1 g/l säurebeständiges Netzmittel, während ohne dieses Netzmittel die Säuremenge 15 g/l bei dem unveränderten Zeit- und Temperaturprogramm der Auswaschung, wie es oben auch für Auswaschgrade von 10 bis 30 % angegeben ist, ausreicht.

Die Erhöhung und Erniedrigung der Behandlungstemperatur gegenüber der bevorzugten Temperatur von ca. 80°C zeigt ebenfalls eine Erhöhung bzw. Erniedrigung des Auswaschgrades, ebenso die Verlängerung oder Verkürzung der Behandlungsdauer, jedoch werden diese Maßnahmen nicht bevorzugt, da es im Betrieb einfacher ist, mit einem einmal eingestellten Temperatur- und Zeitprogramm zu arbeiten, und die Effekte der Temperaturveränderung und Zeitveränderung weniger ausgeprägt sind als die Erhöhung oder Erniedrigung der Säurekonzentration und/oder die Veränderung des Flottenverhältnisses. Da man andererseits bemüht ist, die Apparatur immer ganz zu füllen, wird im Betrieb bei Einsatz der gleichen Glasfaserware auch das Flottenverhältnis möglichst nicht sehr verändert, sonder bei geringen gewünschten Änderungen der Zusatz an säurebeständigem Netzmittel, aber insbesondere und vorzugsweise die Säurekonzentration variiert.

Wenn auch bei Auswaschgraden von 1 bis etwa 3 % die Festigkeiten nicht so radikal abfallen wie bei höheren Auswaschgraden, ist doch der Festigkeitsabfall ohne Nachbehandlung unter Aufbringen des wasserdampfdichten Überzuges und vor allem der Staubanfall bei der Verarbeitung auf z.B. der Bandwebmaschine so hoch, daß auch hier das Aufbringen dieses wasserdampfdichten Überzuges wesentlich für die gute technische Weiterverarbeitbarkeit auf Textilmaschinen ohne Gesundheitsgefährdung durch Staubbildung ist.

Die folgenden Beispiele erläutern die Erfindung.

Beispiel 1

Eine HT-Färbeapparatur üblicher Bauart (Säurefest) von 2000 Liter Flotteninhalt wurde mit 2000 Liter einer etwa 10 gew.%igen Salpetersäure (300 l Salpetersäure 52/53 % und 1700 l Wasser) gefüllt. Dann wurden Glasseidefilamentspulen (Faserdicke 9 μm) wie für das HT-Färben üblich eingesetzt.
(Das Flottenverhältnis betrug 1 : 5)
Die beschickte Flotte wurde dann innerhalb von 30 Minuten von 25°C (Ausgangstemperatur) auf 80°C gebracht und dann 30 Minuten bei 80°C gehalten. Dann wurde durch indirektes Abkühlen die Temperatur innerhalb von 15 Minuten auf 50°C gebracht und dann durch Kaltwasserzulauf weiter abgekühlt. Der Bypass war dabei und auch in den folgenden Arbeitsgängen immer offen. Der Kaltwasserzulauf erfolgte durch Spülen im Überlauf und danach Ablassen des Bades.

Dann wurde der Inhalt einmal kalt gespült und das Bad wieder abgelassen und schließlich wurde mit einem Spülbad, das Ammoniak enthielt, der gesamte Inhalt auf pH 8 gebracht und das Spülbad dann abgelassen.

Um der behandelten Glasfaser eine Kennfärbung zu verleihen, wurde dann mit Astrazonblau BG (30 g/Flotteninhalt) 10 Minuten lang kalt gefärbt und die Spulen wurden dann durch einmaliges Füllen der Apparatur mit Wasser und Ablassen des Wassers gespült.

Die Nachbehandlung erfolgte in der gleichen Apparatur direkt an den Spulen mit einer Dispersion von 10 g/l eines hitzereaktiven, selbstvernetzenden copolymeren Kunststoffderivats (z.B. dem im Handel erhältlichen Präparat Pretavyl 9179 in Form einer anionenaktiven weißen dünnflüssigen Dispersion mit 27 % Aktivsubstanz vom pH 4, die in kaltem Wasser in jedem Verhältnis unter Rühren löslich ist. Es vernetzt bei Temperaturen ab 130°C). Als Dispergiermittel war der Flotte 1 g/l Solpon BS zugesetzt (handelsüblicher Waschmittelbestandteil der Fa. Dr. Th. Böhme). Die Glasseidenspulen wurden 30 Minuten bei 25°C in der HT-Färbeapparatur mit der Schlichte behandelt. Dann wurden die Materialträger aus dem Nachbehandlungsbad gezogen und in dem der HT-Apparatur nachfolgenden Schnelltrockner getrocknet, indem 1 Minute bei 130°C abgedrückt und dann 45 Minuten bei 130°C getrocknet und gleichzeitig kondensiert wurde. Wie bei der Färbung war auch beim Trocknen der Luftverlauf von innen nach außen.

Diese Behandlung ergab einen Gewichtsverlust der Glasfaser von ca. 20 % und eine Schlichtemenge von ca. 1 Gew.% bezogen auf Glasfaser.

Die Festigkeit der getrockneten Glasfaser betrug 111 N gegenüber einer Ausgangsfestigkeit der eingesetzten Glasfaser von 300 N und einer Restfestigkeit der säurebehandelten Glasfaser, die vor Aufbringung der Schlichte getrocknet wurde, von 28 N.

## Beispiel 2

Der Versuch wurde in einer kleineren HT-Färbeapparatur mit 97,5 Liter Salpetersäure von 52/53 % in einer HT-Apparatur von 635 l Fassungsvermögen (netto) wiederholt. Das Flottenverhältnis betrug wiederum 1:5. Verwendet wurden 128 kg EC-Glasseide 9/720 tex × 3. Die Zirkulation der Behandlungssäure erfolgte von innen nach außen bei geöffnetem Bypass. Es wurde wieder innerhalb von 30 Minuten von Raumtemperatur auf 80°C aufgeheizt. Der Druck, der sich dabei selbst einstellte, betrug dabei ca. 2 bar. Die Ware wurde 30 Minuten auf 80°C gehalten, dann wurde innerhalb von 15 Minuten durch indirekte Kühlung auf 60°C gekühlt und dann durch langsamen Kaltwasserzulauf über das Ansatzgefäß innerhalb weiterer 15 Minuten auf ca. 30°C.

Das erste Spülbad enthielt 4 g/l 25%ige Ammoniaklösung. Das Spülen erfolgte für 10 Minuten mit dem kalten Ammoniakwasser. Dann wurde nochmals gespült mit einer Lösung von 7 g Remacrylblau 3 G (identisch mit Astrazonblau BG) zur Erzielung einer Kennfärbung, und zwar für 10 Minuten ebenfalls in der Kälte. Zur Entwässerung wurde dann 30 Minuten abgeschleudert, was eine Restfeuchte von ca. 18 % ergab.

Die Ware wurde dann wiederum mit 10 g/l Pretavyl 9179 spez. und 1 g/l Solpon BS 30 Minuten lang bei 25°C nachbehandelt und die Materialträger (Glasseidenspulen) aus dem Nachbehandlungsbad gezogen und im Schnelltrockner wie in Beispiel 1 getrocknet und der Überzug kondensiert.

Die Festigkeit dieser Ware betrug vor der Behandlung ebenfalls ca. 300 N, schleuderfeucht betrug die Reißfestigkeit noch 113,7 N und nach Nachbehandeln und Trocknen mit Kondensation betrug die Festigkeit 97,0 N.

Das ofengetrocknete, nicht mit Schlichte nachbehandelte Produkt zeigt nach dem vollständigen Austrocknen nur noch eine Reißfestigkeit von 28,75 N.

Für den Vergleichsversuch, bei dem wie in Beispiel 2 gearbeitet wurde, jedoch nicht bis zur Vernetzungstemperatur von 130°C, sondern nur bis 100°C beim Trocknen erwärmt wurde, betrug die Festigkeit nach dem Trocknen nur 28,75 N.

Sowohl die Produkte von Beispiel 1 als auch von Beispiel 2 zeigten bei der Weiterverarbeitung des Garnes auf der Bandweberei praktisch keinen Staubanfall, während das Produkt des Vergleichsversuches, bei dem keine feuchtigkeitsdichte, voll vernetzte Schlichte entstanden war, starkes Stauben zeigte und die Reißfestigkeit mit 28 N so tief war, daß der Versuch, das Garn in der Bandweberei einzusetzen, abgebrochen werden mußte.

## Beispiel 3

Zur Kontrolle wurde Beispiel 1 wiederholt und in der gleichen Weise wie in Beispiel 1 angegeben mit Säure gebeizt, gespült, neutralisiert und gefärbt.

Die gefärbte Ware wurde dann in drei Ansätze aufgeteilt, die wie folgt weiterbehandelt wurden:

## Erster Ansatz

Die Spulen wurden bei 100°C getrocknet und die Spulen mit den trockenen Glasseidensträngen dann, wie im Beispiel 1 angegeben, in einer Flotte aus einer Dispersion von 10 g/l Pretavyl 9179 spez. mit 1 g/l Solpon BS als Dispergiermittel 30 Minuten bei 25°C nachbehandelt und dann im HT-Schnelltrockner getrocknet, wie in Beispiel 1 angegeben.

Die Endfestigkeit betrug 87 N.

## Zweiter Ansatz

Die Spulen wurden schleuderfeucht verarbeitet, also ohne Zwischentrocknung vor dem Schlichten, jedoch sonst identisch mit Ansatz 1. Die Endfestigkeit betrug hier 113 N.

In beiden Fällen war die Festigkeit der ungeschlichteten Faser nach Lagerung und Austrocknung 30 N.

## Dritter Ansatz

Dieser wurde, wie in Beispiel 1 angegeben, nachbehandelt, in der Zentrifuge entwässert und dann im HT-Schnelltrockner, wie in Beispiel 1 angegeben, getrocknet, wobei jedoch nur eine Temperatur von 100°C angewandt wurde (statt 130°C). Hier erfolgte offensichtlich keine Kondensation des Schlichtemittels. Die Endfestigkeit betrug nur 28 N wie bei der ungeschlichteten getrockneten Faser.

Der Versuch zeigt, daß es wichtig ist, einen feuchtigkeits- und wasserdampfdichten Überzug auf der Faser herzustellen und einen Restwassergehalt von mindestens 5 %, insbesondere 5 bis 7 %, in der Glasfaser auf Dauer aufrecht zu erhalten.

Durch Abschleudern besteht die Gefahr, daß das Nachbehandlungsmittel (die feuchtigkeitsdichte Schlichte) unregelmäßig auf der Faser verteilt wird, was bei diesen Versuchen für das schlechtere Ergebnis verantwortlich sein dürfte.

## Beispiel 4

Beispiel 1 wurde identisch wiederholt, wobei jedoch Glasfilamentspulen einer Fadendicke von 6 µm verwendet wurden. Es ergab sich ein Auswaschgrad von ca. 20 %.

Die Anfangsfestigkeit dieser Fäden betrug 450 N und die Endfestigkeit nach Kondensation der Schlichte betrug 241 N, was zeigt, daß bei Anwendung des Verfahrens auf dünnere Fasern ein besserer Erhalt der Festigkeit erzielt werden kann. Die Anwendung auf Glasfasern von 6 µm Dicke ist daher, jedenfalls bei höheren Auswaschgraden, bevorzugt.

## Beispiel 5

Dieses Beispiel wurde in der wie auch in Beispiel 1 verwendeten HT-Apparatur von 2000 l Fassungsvermögen mit Glasfaser EC-9/720 tex × 2 als Ausgangsmaterial bei einem Flottenverhältnis von 1 : 5, einer Säurekonzentration von 12 g $HNO_3$ 52/53 % pro l Bad und 1 g pro l des nichtionogenen Alkylpo-

lyglykoläthers Perenin GNS unter den gleichen Zeit- und Temperaturbedingungen wie für Beispiel 1 beschrieben, durchgeführt. Es ergab sich ein Extraktionsgrad von 2,1 %. Das Ausgangsmaterial hatte eine Reißfestigkeit von 294 N, der durch die Säureextraktion auf die Hälfte abfiel. Nach der erfindungsgemäßen Nachbehandlung mit einer Dispersion von 10 g/l Pretavyl 9179 spez. mit 1 g/l Solpon BS als Dispergiermittel wie in Beispiel 1 und gleichzeitigem Vernetzen der Schlichte ergab sich eine Endfestigkeit von 263 N, was die einwandfreie und staubfreie Weiterverarbeitung auf der Bandwebmaschine gestattete.

Beispiel 6

Beispiel 5 wurde identisch wiederholt, jedoch mit einer Säurekonzentration von 26 g/l statt 12 g/l, was einen Auswaschgrad von 5,2 % ergab. Die Ausgangsfestigkeit von 294 N fiel durch die Extraktion auf 50 N und stieg durch die Nachbehandlung auf 90 N an.

Der Feinstaubanfall beim Prüfprozess steigt in unbehandeltem Zustand mit zunehmendem Auswaschgrad. Bei nachbehandeltem Material ist praktisch keine Feinstaubbildung bei der Weiterverarbeitung feststellbar

Bei Wiederholung der Beispiele 4 und 5 ohne den Zusatz von Perenin war im ersten Fall eine Säurekonzentration von 15 g/l und im zweiten Fall eine Säurekonzentration von 31 g/l erforderlich um 2 bzw. 5 % Auswaschgrad unter sonst gleichen Bedingungen zu erzielen.

**Patentansprüche**

1. Glasfaser mit verbesserter Temperaturbeständigkeit, dadurch gekennzeichnet,daß die zu 1 bis 30 Gew.-% von säurelöslichen Bestandteilen befreite Faser neben ggfs. einem färbenden Überzug einen beständigen, feuchtigkeits- und wasserdampfdichten dünnen, elastischen Überzug aufweist und die umhüllte Faser einen Restwassergehalt von 5 bis 10 Gew.-%, vorzugsweise 5 bis 7 Gew.-%, aufweist.

2. Glasfaser nach Anspruch 1 dadurch gekennzeichnet, daß sie zu 2 bis 20 Gew.-%, insbesondere ·2 bis 15 Gew.-%, von säurelöslichen Bestandteilen befreit ist.

3. Verfahren zur Herstellung einer Glasfaser nach Anspruch 1 oder 2, dadurch gekennzeichnet, daß eine Faser-Säuremischung langsam innerhalb einer Zeitspanne von 1/2 bis 3 Stunden auf Temperaturen im Bereich von 50°C bis dicht unterhalb des Siedepunktes der Säure erhitzt, bei dieser Temperatur gehalten und anschließend langsam auf Umgebungstemperatur abgekühlt wird, wobei Temperatursprünge im Bereich über 50°C sowohl beim Aufheizen wie beim Abkühlen vermieden werden und zur Erzielung eines Auslaugungsgrades von mindestens 1 Gew.-% bis höchstens 30 Gew.-% des ursprünglichen Fasergewichtes die Behandlung ggfs. unter Durck durchgeführt wird und die so extrahierte Glasfaser nach dem Auswaschen der Säurereste, ggfs. unter Zusatz von Basen und ggfs. nach Aufbringen einer Kennfärbung mit einer zu einem wasserdampfdichten Film trocknenden Schicht versehen wird.

4. Verfahren nach Anspruch 3, dadurch gekennzeichnet, daß ein Auslauggrad von 2 bis 20, insb. 2 bis 15 Gew.-% eingestellt wird.

5. Verfahren nach Anspruch 3 oder 4, dadurch gekennzeichnet, daß für den wasserdampfdichten Oberflächenfilm in der Hitze vernetzbare Kunststoffderivate verwendet werden.

6. Verfahren nach Anspruch 3, 4 oder 5, dadurch gekennzeichnet, daß Säurebehandlung, Waschen und Trocknen in einer HT-Färbeapparatur unter den für Auszieh-Färbeverfahren üblichen Bedingungen durchgeführt werden.

7. Verfahren nach Anspruch 6, dadurch gekennzeichnet, daß das Aufbringen des wasserdampfdichten Überzuges auf die Glasfaser in der HT-Färbeapparatur in wässriger Dispersion erfolgt und die so behandelte Faser aus der Apparatur genommen und, ggfs. nach Entwässern, in die HT-Trockenapparatur überführt und dort das Nachbehandlungsmittel bei hinreichend hoher Temperatur, insbesondere mindestens 130°C, kondensiert wird.

8. Verfahren nach Anspruch 3 bis 7, dadurch gekennzeichnet, daß eine Säuremenge entsprechend · 10 bis 200 g $HNO_3$ 52/53 % pro l Bad, insbesondere 10 bis 100 g pro l angewandt wird.

9. Verfahren nach einem der Ansprüche 3 bis 8, dadurch gekennzeichnet, daß 1 bis 3 g/l säurebeständige Netzmittel dem Säurebad zugesetzt werden.

10. Verfahren nach Anspruch 9, dadurch gekennzeichnet, daß gleichzeitig die eingesetzte Säuremenge um 10 bis 20 % verringert wird.

**Claims**

1. Glass fibre of improved temperature resistance, characterized in that the fibre, which has been freed to from 1 to 30% by weight of acid-soluble constituents, has an optional colouring coating, a durable, moisture- and water vapour-tight thin, elastic coating, and the coated fibre has a residual water content of from 5 to 10% by weight, preferably from 5 to 7% by weight.

2. Glass fibre according to Claim 1, characterized in that it has been freed to from 2 to 20% by weight, in particular from 2 to 15% by weight, of acid-soluble constituents.

3. Process for producing a glass fibre according to Claim 1 or 2, characterized in that a fibre/acid mixture is slowly heated within a period of from half an hour to 3 hours to temperatures within the range from 50°C to close below the boiling point of the acid, is maintained at that temperature and is then slowly cooled down to ambient temperature, temperature jumps in the range above 50°C being avoided not only during the heating up but also during the cooling down, and to obtain a degree of extraction of at least 1% by weight to not more than 30% by weight of the original fibre weight, the treatment may be carried out under pressure and the glass fibre thus extracted, once the acid residues have been washed away, with or without the addition of bases, and after an optional identifying colour has been applied, is coated with a layer drying to form a water vapour-tight film.

4. Process according to Claim 3, characterized in that the degree of extraction is standardized to from 2 to 20, in particular from 2 to 15% by weight.

5. Process according to Claim 3 or 4, characterized in that the water vapour-tight surface film is made of heat-durable plastics derivatives.

6. Process according to Claim 3, 4 or 5, characterized in that acid treatment, washing and drying are carried out in an HT dyeing apparatus under conditions customary for exhaust dyeing methods.

7. Process according to Claim 6, characterized in that the water vapour-tight coating is applied to the glass fibre in the HT dyeing apparatus to form an aqueous dispersion and the fibre glass treated is removed from the apparatus, optionally dewatered, and transferred to the HT drying apparatus, where the aftertreatment agent is condensed at a sufficiently high temperature, in particular at not less than 130°C.

8. Process according to Claims 3 to 7, characterized in that an amount of acid corresponding to from 10 to 200 g of $HNO_3$ 52/53% is employed per l of bath, in particular from 10 to 100 g per l.

9. Process according to any one of Claim 3 to 8, characterized in that from 1 to 3 g/l of acid-resistant wetting agent are added to the acid bath.

10. Process according to Claim 9, characterized in that at the same time the amount of acid used is reduced by from 10 to 20%.

## Revendications

1. Fibre de verre modifiée à constance thermique améliorée, caractérisée en ce que la fibre, débarrassée des constituants solubles dans l'acide dans une proportion de 1 à 30% en poids possède, outre un revêtement colorant éventuel, un revêtement éalstique mince, résistant, étanche à l'humidité et à la vapeur d'eau, et que la fibre enrobée présente une teneur en eau résiduelle de 5 à 10% en poids, de préférence de 5 à 7% en poids.

2. Fibre de verre selon la revendication 1, caractérisée en ce qu'elle est débarrassée des constituants solubles dans l'acide dans une proportion de 2 à 20% en poids, de préférence de 2 à 15% en poids.

3. Procédé pour la fabrication d'une fibre de verre selon la revendication 1 ou 2, caractérisé en ce qu'un mélange de fibre et d'acide est chauffé lentement pendant un laps de temps d'une demi-heure à 3 heures et porté à des températures de l'ordre de 50°C jusqu'au voisinage immédiat du point d'ébullition de l'acide, maintenu à cette température puis refroidi lentement jusqu'à la température ambiante, les sauts de température dans la zone dépassant 50°C étant évités tant pendant le chauffage que pendant le refroidissement, et, pour obtenir un degré de lixiviation d'au moins 1% en poids jusqu'à au plus 30% en poids du poids initial de la fibre, le traitement est effectué éventuellement sous pression et, après enlèvement par lavage des résidus d'acide, éventuellement avec addition de bases est éventuellement après application d'une coloration d'identification, la fibre de verre ainsi extraite est pourvue d'une couche qui forme en séchant un film étanche à la vapeur d'eau.

4. Procédé suivant la revendication 3, caractérisé en ce qu'est fixé degré de lixiviation de 2 à 20% en poids, en particulier de 2 à 15% en poids.

5. Procédé suivant la revendication 3 ou 4, caractérisé en ce qu'on utilise pour le film superficiel étanche à la vapeur d'eau des dérivés de matière plastique réticulables à chaud.

6. Procédé suivant une quelconque des revendications 3 à 5, caractérisé en ce que le traitement à l'acide, le lavage et le séchage sont effectués dans un appareillage de teinture à haute température dans les conditions habituelles pour le procédé de teinture par extraction AZ.

7. Procédé suivant la revendication 6, caractérisé en ce que l'application du revêtement étanche à la vapeur d'eau sur la fibre de verre s'effectue en dispersion aqueuse dans l'appareillage de teinture à haute température et la fibre ainsi traitée est sortie de l'appareillage et, éventuellement après élimination de l'eau, introduite dans l'appareillage de séchage à haute température où l'agent de traitement complémentaire est condensé à une température suffisamment élevée, en particulier au moins 130°C.

8. Procédé suivant une quelconque des revendications 3 à 7, caractérisé en ce qu'est utilisée une quantité d'acide correspondant à 10 à 200 g de $HNO_3$ à 52/53% par litre de bain, en particulier 10 à 100 g par litre de bain.

9. Procédé suivant une quelconque des revendications 3 à 8, caractérisé en ce que de 1 à 3 g/l d'agent mouillant résistant à l'acide sont ajoutés au bain d'acide.

10. Procédé suivant la revendication 9, caractérisé en ce que simultanément la quantité d'acide utilisée est diminuée de 10 à 20%.